# EUROPEAN PATENT APPLICATION

(11) **EP 2 377 698 A1**
(43) Date of publication of application: **19.10.2011**
(21) Application number: 10004005.4
(22) Date of filing: 15.04.2010
(51) Int. Cl.: B60C 23/04

(54) **Integrated system and method for tire pressure monitoring and remote keyless entry**

(71) Applicant: Delta Electronics, Inc., Taoyuan Hsien 33341 (TW)
(72) Inventor: Sun, Chun-Yi, Taoyuan Hsien 33341 (TW)
(74) Representative: TER MEER - STEINMEISTER & PARTNER GbR

(57) **Abstract**

An integrated system and method for tire pressure monitoring and remote keyless entry are applied to a vehicle and an RKE (remote keyless entry) fob (30). The RKE fob (30) transmits a wireless signal with a predetermined carrier frequency. An in-vehicle integrated controller (10) detects an unlocked request signal from the RKE fob (30) when the vehicle is locked. When the unlocked request is authenticated and the vehicle door is unlocked, a tire information request signal is immediately sent to tire pressure monitoring modules (20) and the tire pressure monitoring modules (20) send tire information signals containing at least a tire pressure data within a predetermined time threshold. The tire information signals are also sent at the predetermined carrier frequency. Therefore, the advantages of hardware sharing and better safety can be achieved.

## Description

### Field of the Invention

The present invention relates to a tire pressure monitoring method, especially to integrated system and method for tire pressure monitoring and remote keyless entry.

### Description of Prior Art

When the pneumatic pressure within a tire of vehicle (referred as tire pressure in the following) is abnormal, there are several disadvantages. For example, tire service life decreases and fuel consumption increases. Moreover, brake effect is affected and the possibility of tires going flat also increases to cause car accident. Therefore, a tire pressure monitor system (referred as TPMS in the following) is gradually applied in vehicles to assure driving safety and to effectively avoid car accidents caused by driving a vehicle having abnormal tire pressures. A prior art tire pressure monitor system comprises a tire pressure sensor and a radio frequency (RF) transceiver (together referred to as tire pressure monitoring module) installed in the tire, and an RF transceiver and a display installed in a vehicle. The tire pressure monitoring module measures tire pressure data of a corresponding tire, then wirelessly transmits the tire pressure data to the RF transceiver in vehicle to show the tire pressure data on display for the vehicle user.

Moreover, keyless entry system has been widely used for vehicle to replace traditional physical key. The keyless entry system can be classified to Remote Keyless Entry RKE system and Passive Keyless Entry PKE system. In RKE system, user needs to press the RKE fob to unlock the vehicle; while in the PKE system, the vehicle is automatically unlocked when the PKE fob is close enough to the vehicle. Namely, the PKE user does not need to press the PKE fob to unlock his vehicle. In the above mentioned two keyless entry systems, the key fob has wireless transmitter and the vehicle has corresponding wireless receiver.

The above mentioned tire pressure monitoring system and the keyless entry system are two independent systems for vehicle and do not communicate to each other or have shared component. More particularly, the vehicle needs one set of wireless receiver corresponding to the tire pressure monitoring system, and another set of wireless receiver corresponding to the keyless entry system. However, if the tire pressure monitoring system and the keyless entry system exploit the same frequency band, cost can not be reduced because hardware is not shared in above mentioned prior art systems.

Moreover, the tire pressure monitoring module of the conventional tire pressure monitoring system is located within the vehicle tire and is powered by battery. The signal transmitting period (namely the temporal duration between two wireless tire pressure signals sent by the tire pressure monitoring module) is desirably long enough to save battery power. However, for safety concern, the vehicle user should be informed the tire pressure in time. The tire pressure monitoring module is also desirably to provide tire pressure data to vehicle user as the user intends to drive the vehicle.

### SUMMARY OF THE INVENTION

It is an object of the present invention to provide an integrated system and method for tire pressure monitoring and remote keyless entry in order to provide tire pressure data in time.

It is another object of the present invention to provide an integrated system and method for tire pressure monitoring and remote keyless entry for satisfying the real time requirement of tire pressure data and the requirement of saving power.

Accordingly, the integrated system for tire pressure monitoring and remote keyless entry comprises an in-vehicle integrated controller located within the vehicle and comprising a central controller unit and a central wireless transceiver electrically connected to the central controller unit; and at least one tire pressure monitoring module located at a vehicle tire. The tire pressure monitoring module comprises a tire pressure processing unit, a tire pressure wireless transceiver and a tire pressure sensor, wherein the pressure processing unit is electrically connected to the tire pressure wireless transceiver and the tire pressure sensor, the tire pressure wireless transceiver is operated at the predetermined carrier frequency. The in-vehicle integrated controller is configured to send a tire information request signal to the tire pressure monitoring module when the in-vehicle integrated controller receives and authenticates an unlocked request from the key fob. The tire pressure monitoring module is configured to send a tire information signal containing at least tire pressure data within a predetermined time threshold after the tire pressure monitoring module receives the tire information request signal.

Accordingly, the integrated method for tire pressure monitoring and remote keyless entry comprises following steps:
(a) sensing an unlocked request from the key fob when the vehicle is locked;
(b) sending a tire information request signal to a tire pressure monitoring module when an ID code in the unlocked request is authenticated; and
(c) the tire pressure monitoring module sending a tire information signal containing at least a tire pressure data within a predetermined time threshold after the tire pressure monitoring module receives the tire information request signal, wherein the tire information signal is sent at the predetermined carrier frequency.

By the system and method of the present invention, the vehicle needs only one a wireless transceiver therein for the tire pressure monitoring system and remote keyless entry system, the cost is reduced. Moreover, the tire pressure monitoring module sends tire pressure data within a predetermined time threshold (for example, 6 seconds) after the vehicle is unlocked. The demand for enhanced safety is achieved.

### BRIEF DESCRIPTION OF DRAWING

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 shows a schematic diagram demonstrating the application of the integrated system and method for tire pressure monitoring and remote keyless entry according to the present invention.
Fig. 2 shows the block diagram of the integrated system for tire pressure monitoring and remote keyless entry according to the present invention.
Fig. 3 shows the flowchart of the integrated method for tire pressure monitoring and remote keyless entry according to the present invention.
Fig. 4 shows schematic diagram showing the signal-transmitting period.

### DETAILED DESCRIPTION OF THE INVENTION

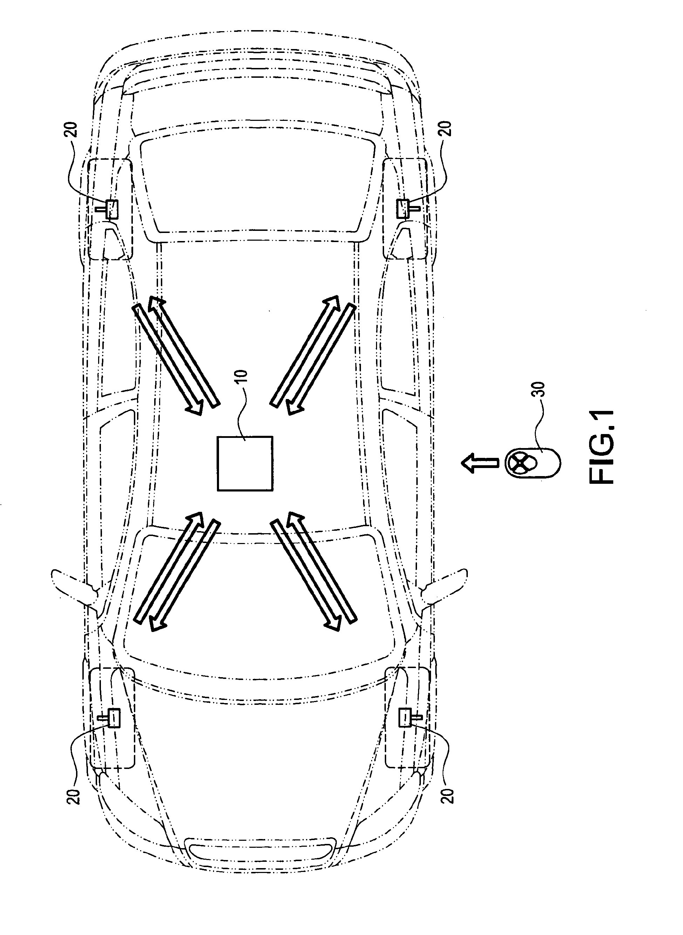

Fig. 1 shows a schematic diagram demonstrating the application of the integrated system and method for tire pressure monitoring and remote keyless entry according to the present invention. The integrated system for tire pressure monitoring and remote keyless entry is applied for a vehicle and comprises an in-vehicle integrated controller 10 and at least one tire pressure monitoring module 20 (four tire pressure monitoring modules shown in this figure). The vehicle has a corresponding key fob (such as an RKE fob) 30, where the in-vehicle integrated controller 10 can communicate with the tire pressure monitoring module 20 and the key fob 30 in wireless way. More particularly, the in-vehicle integrated controller 10, the tire pressure monitoring module 20 and the key fob 30 use a predetermined high-frequency carrier for wireless communication. The high-frequency carrier can be at the frequency of 433.92MHz or 315MHz or other high frequency bands.

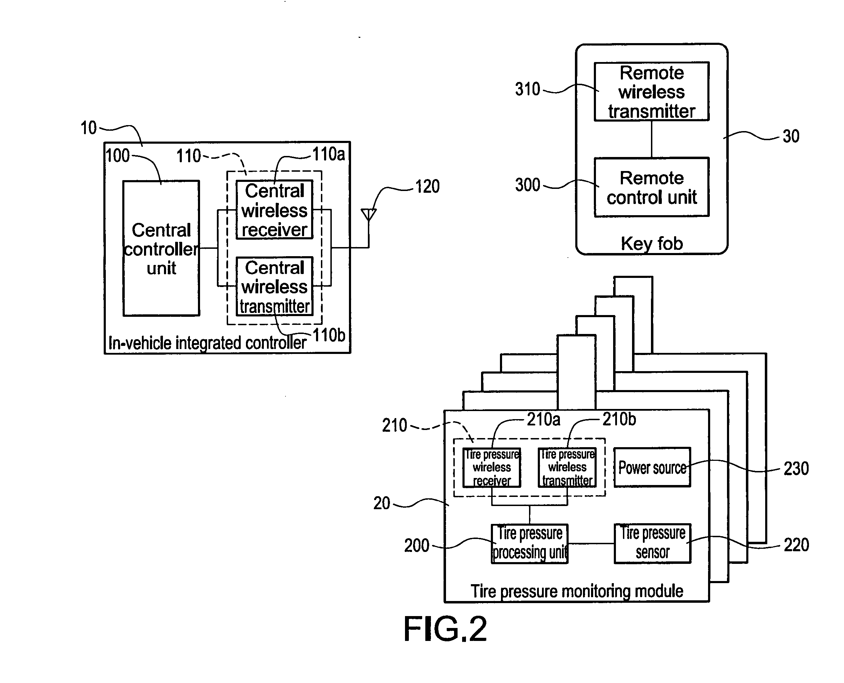

Fig. 2 shows the block diagram of the integrated system for tire pressure monitoring and remote keyless entry according to the present invention. The in-vehicle integrated controller 10 comprises a central controller unit 100, a central wireless receiver 110a, a central wireless transmitter 110b and an antenna 120, where the central wireless receiver 110a and the central wireless transmitter 110b are electrically connected to the central controller unit 100 and can be integrated into a central wireless transceiver 110. The central wireless transceiver 110 receives, through the antenna 120, a locked (or an unlocked) wireless signal sent from the key fob 30, and has two-way wireless communication with the tire pressure monitoring module 20. The central controller unit 100 is programmed to authenticate the locked/unlocked wireless signal sent from the key fob 30, and generate control signal for the tire pressure monitoring module 20. The key fob 30 comprises a remote control unit 300, a remote wireless transmitter 310, an antenna (not shown), and a plurality of buttons (not shown). A vehicle user can press button on the key fob 30 to send locked/unlocked wireless signal therefrom, where the locked/unlocked wireless signal is a locked/unlocked request containing an ID code therein. The central controller unit 100 receives the locked/unlocked wireless signal through the antenna 120 and the central wireless transceiver 110. The central controller unit 100 controls a vehicle door lock to lock or unlock vehicle door when the locked/unlocked wireless signal is authenticated.

The tire pressure monitoring module 20 comprises a tire pressure processing unit 200, a tire pressure wireless receiver 210a, a tire pressure wireless transmitter 210b, and a tire pressure antenna (not shown), where tire pressure wireless receiver 210a and the tire pressure wireless transmitter 210b have wireless communication with the central wireless transceiver 110, and can be integrated into a tire pressure wireless transceiver 210. The tire pressure monitoring module 20 is, for example, a battery-powered tire pressure monitoring module and further comprises a tire pressure sensor 220 and a power source (such as a battery) 230. The power source 230 also provides electrical power to other components in the tire pressure monitoring module 20. The tire pressure sensor 220 is electrically connected to tire pressure processing unit 200 to send a measured tire pressure data to the tire pressure processing unit 200. The tire pressure processing unit 200 is programmed to process the measured tire pressure data and generate the tire pressure signal applicable for the tire pressure wireless transceiver 210. The programming for the tire pressure processing unit 200 is known to the skilled in the art and is not detailed here. The tire pressure processing unit 200 also receives control command sent from the central controller unit 100 and received through the tire pressure wireless transceiver 210 to control the transmitting period of the tire information signal, which will be detailed later. The tire pressure monitoring module 20 also comprises other sensors such as temperature sensor (not shown) or power sensor (not shown) to sense a temperature in the tire and a remained battery power.

When the vehicle is not at operation (such as before ignition), the tire pressure monitoring module 20 sends tire information signal to the in-vehicle integrated controller 10 at a longer standby period, where the tire information includes at least one of tire pressure data, tire temperature data and battery power data. After the tire pressure monitoring module 20 receives a tire information request signal sent from the in-vehicle integrated controller 10, the tire pressure monitoring module 20 sends tire information signal to the in-vehicle integrated controller 10 within a predetermined time threshold. The predetermined time threshold is, for example, 6 seconds. The tire information signal is sent at high frequency carrier (such as 433.92MHz or 315MHz). According to a preferred embodiment of the present invention, the tire information signal at this time comprises at least one tire pressure data. The tire pressure monitoring module 20 sends tire information signal to the in-vehicle integrated controller 10 at a shorter operation period after the vehicle is at operation (such as after ignition), where the tire information includes at least one of tire pressure data, tire temperature data and battery power data.

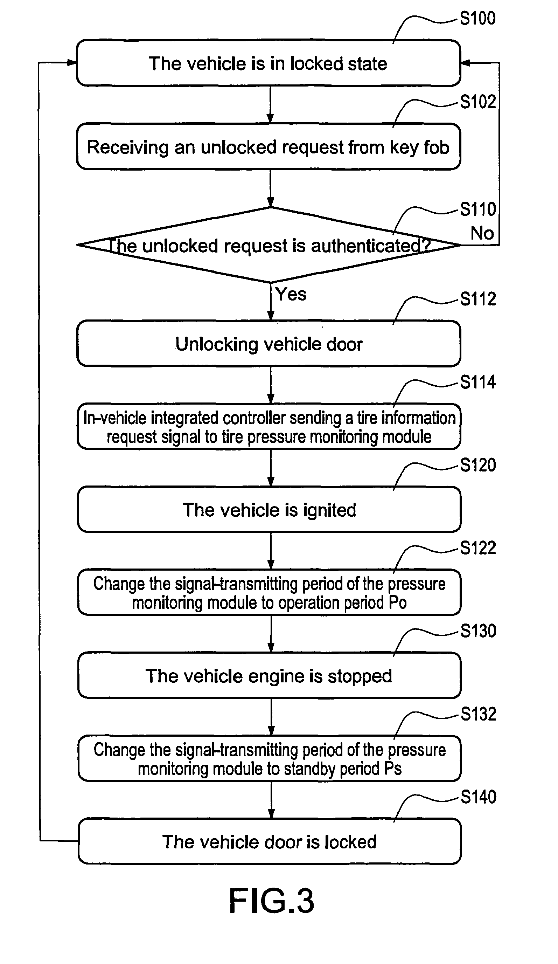

Fig. 3 shows the flowchart of the integrated method for tire pressure monitoring and remote keyless entry according to the present invention. At step S 100, the vehicle using the integrated method of the present invention is in locked state. The in-vehicle integrated controller 10 receives an unlocked request from the key fob 30 in step S102. After the ID code in the unlocked request from the key fob 30 is authenticated by the in-vehicle integrated controller 10 in step S110, the in-vehicle integrated controller 10 performs an unlocked action to unlock vehicle door (S112).

After the vehicle is unlocked, the in-vehicle integrated controller 10 sends a tire information request signal to the tire pressure monitoring module 20 to ask the tire pressure monitoring module 20 to send tire information instantly (S114). The tire pressure monitoring module 20 will send the tire information signal containing a tire information (having at least a tire pressure data) within a predetermined time threshold (for example, 6 seconds) to the in-vehicle integrated controller 10. The tire information is stored in the in-vehicle integrated controller 10 or shown on a display (not shown) under the control of the in-vehicle integrated controller 10. When the in-vehicle integrated controller 10 judges that the vehicle is ignited in step S120, the in-vehicle integrated controller 10 sends a period changing signal to the pressure monitoring module 20 to change the signal-transmitting period for the pressure monitoring module 20 (S122).

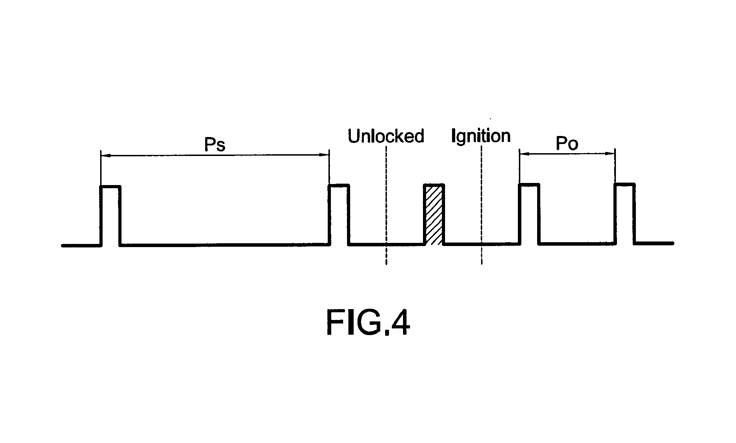

Fig. 4 shows schematic diagram showing the signal-transmitting period. Before the vehicle is ignited, the pressure monitoring module 20 sends the tire information signal at a longer standby period Ps. After the vehicle door is unlocked, the in-vehicle integrated controller sends a tire information request signal to the tire pressure monitoring module 20 to ask the tire pressure monitoring module 20 to send tire information instantly. The tire pressure monitoring module 20 then sends the tire information signal (containing at least the tire pressure data) within a time threshold and the instant tire information signal is shown as shaded pulse in Fig. 4. After the vehicle is ignited, the pressure monitoring module 20 sends the tire information signal at a shorter operation period Po, where Ps>Po. Therefore, the user can be frequently informed of the tire pressure data (at a shorter operation period Po) when the vehicle is driving. When the vehicle is not in use(such as the engine is stopped), the user can still be aware of the updated tire pressure data (sending at a longer standby period Ps), while the battery power is saved.

Refer again to Fig. 3, after the vehicle is ignited, once the in-vehicle integrated controller 10 judges that the vehicle engine is stopped (namely, the engine is not ignited) at step S130, the in-vehicle integrated controller 10 sends a period changing signal to the tire pressure monitoring module 20 to change the period for sending tire information signal (S 132). More particularly, tire pressure monitoring module 20 is controlled by the in-vehicle integrated controller 10 to send tire information signal in a longer standby period Ps to save electric power of the tire pressure monitoring module 20.

If the in-vehicle integrated controller 10 receives a locked command from the key fob 30 at step S 140, it means the vehicle user might be away from vehicle or the vehicle is not in operation, the operation state of the in-vehicle integrated controller 10 returns to the initial locked state (S100) and waits for the unlocked command from the key fob 30.

To sum up, the integrated system and method for tire pressure monitoring and remote keyless entry have following advantages:
1. The vehicle needs only one in-vehicle wireless transceiver for operation with the tire pressure monitoring system and remote keyless entry system, the cost is reduced.
2. After the vehicle door is unlocked by the remote keyless entry system, a tire information request is sent to the tire pressure monitoring module of the tire pressure monitoring system. The tire pressure monitoring module sends a tire information signal (containing at least the tire pressure data) within a predetermined time threshold (for example 6 seconds). Therefore, vehicle user can be informed of the tire pressure before he actually drives the vehicle and the safety standard is enhanced.
3. The tire pressure monitoring module sends a tire information signal at a longer period before the vehicle is ignited, and the tire pressure monitoring module sends a tire information signal at a shorted period after the vehicle is ignited, both safety and power-saving requirements can be achieved.

## Claims

1. An integrated system for tire pressure monitoring and remote keyless entry applied to a vehicle and a key fob (30) sending a wireless signal at a predetermined carrier frequency, the system comprising:
an in-vehicle integrated controller (10) located within the vehicle and comprising a central controller unit (100) and a central wireless transceiver (110) electrically connected to the central controller unit (100); and
at least one tire pressure monitoring module (20) located at a vehicle tire and comprising a tire pressure processing unit (200), a tire pressure wireless transceiver (210) and a tire pressure sensor (220), wherein the pressure processing unit (200) is electrically connected to the tire pressure wireless transceiver (210) and the tire pressure sensor (220), and the tire pressure wireless transceiver (210) is operated at the predetermined carrier frequency;
wherein the in-vehicle integrated controller (10) is configured to send a tire information request signal to the tire pressure monitoring module (20) when the in-vehicle integrated controller (10) receives and authenticates an unlocked request from the key fob (30);
wherein the tire pressure monitoring module (20) is configured to send a tire information signal containing at least a tire pressure data within a predetermined time threshold after the tire pressure monitoring module (20) receives the tire information request signal.

2. The system in claim 1, wherein the predetermined time threshold is 6 seconds.

3. The system in claim 1, wherein the tire pressure monitoring module (20) is configured to send the tire information signal at a standby period before the vehicle is ignited, and the tire pressure monitoring module (20) is configured to send the tire information signal at an operation period after the vehicle is ignited, wherein the standby period is longer than the operation period.

4. The system in claim 1, wherein the predetermined carrier frequency is 433.92MHz or 315MHz.

5. The system in claim 1, wherein the tire pressure monitoring module (20) further comprises a battery (230).

6. An integrated method for tire pressure monitoring and remote keyless entry applied to a vehicle and a key fob (30) sending a wireless signal at a predetermined carrier frequency, the method comprising:
(a) detecting an unlocked request from the key fob (30) when the vehicle is locked;
(b) sending a tire information request signal to a tire pressure monitoring module (20) when the unlocked request is authenticated; and
(c) the tire pressure monitoring module (20) sending a tire information signal containing at least a tire pressure data within a predetermined time threshold after the tire pressure monitoring module (20) receives the tire information request signal, wherein the tire information signal is sent at the predetermined carrier frequency.

7. The method in claim 6, wherein the predetermined carrier frequency is 433.92MHz or 315MHz.

8. The method in claim 6, wherein the predetermined time threshold is 6 seconds.

9. The method in claim 6, wherein the tire pressure monitoring module (20) is configured to send the tire information signal at a standby period before the vehicle is ignited, and the tire pressure monitoring module (20) is configured to send the tire information signal at an operation period after the vehicle is ignited, wherein the standby period is longer than the operation period.

10. The method in claim 6, wherein the tire pressure monitoring module (20) is a battery-powered tire pressure monitoring module with a battery.
